# EUROPÄISCHE PATENTSCHRIFT

(11) **EP 3 582 443 B1**
(45) Veröffentlichungstag und Bekanntmachung des Hinweises auf die Patenterteilung: **30.12.2020**
(21) Anmeldenummer: 19169705.1
(22) Anmeldetag: 17.04.2019
(51) Int. Cl.: H04L 12/26, H04L 12/24

(54) **GRAMMATIKERKENNUNG**
GRAMMAR DETECTION
DÉTECTION DE LA GRAMMAIRE

(30) Priorität: 11.06.2018 AT 504612018
(43) Veröffentlichungstag der Anmeldung: 18.12.2019
(73) Patentinhaber: AIT Austrian Institute of Technology GmbH, 1210 Wien (AT)
(72) Erfinder: Wurzenberger, Markus, 1090 Wien (AT); Landauer, Max, 1070 Wien (AT); Skopik, Florian, 2000 Stockerau (AT); Fiedler, Roman, 8020 Graz (AT)
(74) Vertreter: Wildhack & Jellinek

(56) Entgegenhaltungen:
- EP-A1- 2 800 307
- EP-A1- 3 267 625
- DE-A1- 19 954 534
- DE-U1-202013 011 084

## Beschreibung

Die Erfindung betrifft ein Verfahren zur Charakterisierung des Zustands eines Computersystems. Als Ergebnis liefert die Erfindung eine strukturierte Beschreibung des Systemzustands, der insbesondere zur Detektion von anormalen Zuständen in Computersystemen genutzt werden kann.

Aus dem Stand der Technik sind unterschiedliche Verfahren bekannt, mit denen es möglich ist, den inneren Zustand eines Computersystems anhand bestimmter aussagekräftiger Parameter oder Datenstrukturen zu charakterisieren. Der grundsätzliche Zweck dieser Vorgehensweise liegt darin, durch den Erhalt von charakteristischen Parametern oder Datenstrukturen für ein Computersystem anormale Betriebszustände zu erkennen. Bei derartigen anormalen Betriebszuständen kann es sich beispielsweise um besondere Betriebszustände handeln, bei denen das System durch einen Hacker-Angriff modifiziert wird oder bei dem aufgrund unbeabsichtigter Änderungen eine Fehlfunktion des Systems besteht. Darüber hinaus werden jedoch auch andere abweichende Betriebsmodi detektiert, die beispielsweise mit Software-Updates oder ähnlichen Veränderungen des Systems des Computersystems einhergehen.

In der Druckschrift EP3267625 A1 wird ein Verfahren zur Detektion von anomalen Zuständen beschrieben, insbesondere verursacht durch Manipulation, in einem Computernetzwerk, welches mehrere Computer umfasst, -wobei Computer bei Auftreten vorgegebener Ereignisse einen Protokolldatensatz erstellen, -wobei die Protokollzeilen aus den einzelnen Protokolldateien homogenisiert werden und in eine zentrale Protokolldatei geschrieben werden, -wobei eine recodierte Protokolldatei der zentralen Protokolldatei erstellt wird, indem zeilenweise aufeinander folgende Zeichen oder Zeichenketten der zentralen Protokolldatei aufgrund einer Codierungsvorschrift in eine recodierte Protokolldatei übergeführt werden, -wobei die einzelnen Zeilen der recodierten Protokolldatei hinsichtlich ihrer Ähnlichkeit analysiert und zu Gruppen zusammengefasst werden, und -wobei nach Gruppen mit einer geringen Anzahl von Zeilen, insbesondere mit nur einer einzigen Zeile, gesucht wird.

Mit der vorliegenden Erfindung wird eine weitere, einfach handhabbare und einfach auf weitere Protokollzeilen anwendbare Möglichkeit der Charakterisierung eines Computersystems geschaffen.

Der Erfindung liegt dabei die grundsätzliche Intention zugrunde, einzelne vom Computersystem oder den auf dem Computersystem ablaufenden Programmen erstellte Protokollzeilen zu analysieren und für diese Protokollzeilen eine Grammatik zu ermitteln, durch die die Gestalt der einzelnen Protokollzeilen charakterisiert werden kann.

Anders als bei Grammatiken von Computersprachen, die üblicherweise vorab vorgegeben werden, wird im Rahmen der Erfindung eine Grammatik bzw. ein die Grammatik der Protokollzeilen repräsentierender Baum aufgrund von bestehenden Protokollzeilen erstellt. Nachfolgende Protokollzeilen können anschließend daraufhin überprüft werden, ob sie im Sinne der so ermittelten Grammatik als grammatisch betrachtet werden und als dem normalen Systemzustand zugehörig betrachtet werden können.

Weicht die betreffende Protokollzeile jedoch von der Grammatik ab, so wurde eine Situation gefunden, die mit dem zuvor ermittelten normalen Betriebszustand bzw. mit diesem mit einer gewissen Wahrscheinlichkeit nicht in Übereinstimmung gebracht werden kann. In diesem Fall kann ein Systemzustand detektiert werden, der im vorliegenden Sinn als anormal angesehen werden kann. Ein solcher anormaler Betriebszustand kann insbesondere dann gefunden werden, wenn sich eine Mehrzahl oder eine einen Schwellenwert überschreitende Anzahl von neu ermittelten Protokollzeilen nachträglich als nicht grammatisch erweist.

Eine weitere vorteilhafte Möglichkeit, den Systemzustand zu charakterisieren und Änderungen des Systemzustands zu ermitteln, liegt darin, zu unterschiedlichen Zeitpunkten oder für unterschiedliche Zeitfenster jeweils separat einen die Grammatik charakterisierenden Graphen bzw Syntaxbaum zu erstellen und diese so erstellten Syntaxbäume auf ihre Unterschiede hin zu untersuchen. Sofern diese Syntaxbäume signifikante Unterschiede aufweisen, kann eine Abweichung des Betriebszustands festgestellt werden.

Die Erfindung sieht ein Verfahren zur Charakterisierung des Zustands eines Computersystems nach Anspruch 1 vor.

Bevorzugt kann ein Computerprogramm zur Durchführung eines erfindungsgemäßen Verfahrens auf einem Datenträger abgespeichert werden.

### Erfassung und Vorbehandlung von Protokollzeilen:

Konkret werden einige vorteilhafte Ausführungsformen der Erfindung anhand der vorliegenden Ausführungsbeispiele näher dargestellt:
In der folgenden Tabelle wird zum besseren Verständnis der Funktionsweise des im Folgenden gezeigten Parsergenerators ein Beispiel einer Anzahl von Protokollzeilen L₁, ..., L₁₀₀ dargestellt. Da die in der Praxis verwendeten Logfiles sehr unterschiedliche Strukturen aufweisen und üblicherweise über einen erheblichen Umfang verfügen, wird an dieser Stelle lediglich ein Logfile mit einer reduzierten Länge zu Demonstrationszwecken verwendet. Dabei sind die einzelnen, in den Logfiles verwendeten Wörter durch Großbuchstaben A, ..., Z abstrahiert, wobei jeder der im Folgenden dargestellten Großbuchstaben A, ..., Z in den einzelnen Zeilen jeweils einem bestimmten Wort entspricht. Alternativ besteht auch die Möglichkeit, dass einer der dargestellten Großbuchstaben A, ..., Z in der folgenden Tabelle auch für die Verwendung eines bestimmten anderen Musters steht, beispielsweise kann einer der Buchstaben auch für das Auftreten einer IP-Adresse oder einem Zeitstempel in einem vorgegebenen Format oder einer anderen strukturierten Zeichenkette stehen.

Die in der vorstehenden Tabelle dargestellten Protokollzeilen L₁, ..., L₁₀₀ wurden zu unterschiedlichen Zeitpunkten im betreffenden Computersystem aufgezeichnet, wobei die so erstellten Protokollzeilen L₁, ..., L₁₀₀ vorab mit einem Tokenisierungsalgorithmus in eine Vielzahl von Teilzeichenketten zerlegt wurden. Im Rahmen der Tokenisierung werden dabei unterschiedliche Sonder- oder Leerzeichen herangezogen, um eine Trennung der Protokollzeilen L₁, ..., L₁₀₀ in einzelne Teilzeichenketten zu bewirken. Im vorliegenden Fall wurden für die Trennung der einzelnen Protokollzeilen in Teilzeichenketten jeweils Leerzeichen herangezogen, um die Trennung in einzelne Teilzeichenketten zu gewährleisten. Es ist jedoch ohne Weiteres möglich, auch andere Sonderzeichen oder Teilzeichenketten heranzuziehen, mit denen typischerweise Protokollzeilen L₁, ..., L₁₀₀ in einzelne Wörter unterteilt sind. Dabei handelt es sich üblicherweise um Kommas, Tabulatoren, Klammern, Semikolons oder ähnliche Trenn- und Sonderzeichen.

| **Zeile** | **Position: 1** | **2** | **3** | **4** | **5** |
|---|---|---|---|---|---|
| **L₁** | Jul/18/00:00:01 | A | E | H | J |
| **L₂** | Jul/18/00:00:04 | B | E | I | K |
| **L₃** | Jul/18/00:00:05 | C | F | G | |
| **L₄** | Jul/18/00:00:10 | B | E | I | K |
| **L₅** | Jul/18/00:00:18 | A | E | H | J |
| **L₆** | Jul/18/00:00:20 | D | E | I | A |
| **L₇** | Jul/18/00:00:21 | B | E | I | K |
| **L₈** | Jul/18/00:00:24 | C | F | G | |
| **L₉** | Jul/18/00:00:25 | L | M | N | O |
| **L₁₀** | Jul/18/00:00:26 | A | E | H | J |
| **L₁₁** | Jul/18/00:00:27 | L | M | N | O |
| **L₁₂** | Jul/18/00:00:28 | A | E | H | J |
| **L₁₃** | Jul/18/00:00:30 | B | E | I | K |
| **L₁₄** | Jul/18/00:00:31 | A | E | H | J |
| **L₁₅** | Jul/18/00:00:32 | B | E | I | |
| **L₁₆** | Jul/18/00:00:33 | D | E | I | B |
| **L₁₇** | Jul/18/00:00:35 | A | E | H | J |
| **L₁₈** | Jul/18/00:00:37 | D | E | I | C |
| **L₁₉** | Jul/18/00:00:38 | D | E | I | D |
| **L₂₀** | Jul/18/00:00:39 | C | F | H | |
| **L₂₁** | Jul/18/00:00:40 | D | E | I | E |
| **L₂₂** | Jul/18/00:00:41 | A | E | H | J |
| **L₂₃** | Jul/18/00:00:42 | C | F | I | |
| **L₂₄** | Jul/18/00:00:44 | B | E | I | K |
| **L₂₅** | Jul/18/00:00:45 | D | X | I | F |
| **L₂₆** | Jul/18/00:00:46 | C | F | G | |
| **L₂₇** | Jul/18/00:00:48 | B | E | I | K |
| **L₂₈** | Jul/18/00:00:49 | D | E | I | G |
| **L₂₉** | Jul/18/00:00:51 | A | E | H | J |
| **L₃₀** | Jul/18/00:00:55 | C | F | H | |
| **L₃₁** | Jul/18/00:00:58 | A | E | H | J |
| **L₃₂** | Jul/18/00:01:02 | B | E | I | K |
| **L₃₃** | Jul/18/00:01:03 | D | E | I | H |
| **L₃₄** | Jul/18/00:01:05 | C | F | I | |
| **L₃₅** | Jul/18/00:01:07 | B | E | I | K |
| **L₃₆** | Jul/18/00:01:09 | C | F | G | |
| **L₃₇** | Jul/18/00:01:10 | D | E | I | I |
| **L₃₈** | Jul/18/00:01:13 | A | E | H | J |
| **L₃₉** | Jul/18/00:01:14 | B | E | I | |
| **L₄₀** | Jul/18/00:01:15 | D | E | I | J |
| **L₄₁** | Jul/18/00:01:16 | A | E | H | J |
| **L₄₂** | Jul/18/00:01:17 | D | E | I | K |
| **L₄₃** | Jul/18/00:01:18 | C | F | I | |
| **L₄₄** | Jul/18/00:01:19 | C | F | H | |
| **L₄₅** | Jul/18/00:01:20 | C | F | H | |
| **L₄₆** | Jul/18/00:01:22 | D | Y | I | L |
| **L₄₇** | Jul/18/00:01:24 | B | E | I | K |
| **L₄₈** | Jul/18/00:01:25 | D | E | I | M |
| **L₄₉** | Jul/18/00:01:27 | A | E | H | J |
| **L₅₀** | Jul/18/00:01:28 | B | E | I | K |
| **L₅₁** | Jul/18/00:01:33 | A | E | H | J |
| **L₅₂** | Jul/18/00:01:34 | C | F | G | |
| **L₅₃** | Jul/18/00:01:36 | L | M | N | O |
| **L₅₄** | Jul/18/00:01:39 | D | E | I | N |
| **L₅₅** | Jul/18/00:01:41 | C | F | G | |
| **L₅₆** | Jul/18/00:01:42 | D | E | I | O |
| **L₅₇** | Jul/18/00:01:44 | C | F | G | |
| **L₅₈** | Jul/18/00:01:46 | A | E | G | |
| **L₅₉** | Jul/18/00:01:47 | D | E | I | P |
| **L₆₀** | Jul/18/00:01:49 | C | F | W | |
| **L₆₁** | Jul/18/00:01:50 | B | E | I | K |
| **L₆₂** | Jul/18/00:01:52 | A | E | H | J |
| **L₆₃** | Jul/18/00:01:54 | C | F | I | |
| **L₆₄** | Jul/18/00:01:55 | A | E | H | J |
| **L₆₅** | Jul/18/00:01:57 | B | E | I | K |
| **L₆₆** | Jul/18/00:01:59 | D | E | I | Q |
| **L₆₇** | Jul/18/00:02:00 | B | E | I | K |
| **L₆₈** | Jul/18/00:02:02 | C | F | X | |
| **L₆₉** | Jul/18/00:02:04 | A | E | H | J |
| **L₇₀** | Jul/18/00:02:06 | A | E | H | J |
| **L₇₁** | Jul/18/00:02:07 | B | E | I | K |
| **L₇₂** | Jul/18/00:02:08 | D | E | I | R |
| **L₇₃** | Jul/18/00:02:10 | C | F | G | |
| **L₇₄** | Jul/18/00:02:11 | L | M | N | O |
| **L₇₅** | Jul/18/00:02:13 | D | E | I | S |
| **L₇₆** | Jul/18/00:02:14 | A | E | H | J |
| **L₇₇** | Jul/18/00:02:16 | D | E | I | T |
| **L₇₈** | Jul/18/00:02:19 | A | E | H | J |
| **L₇₉** | Jul/18/00:02:22 | C | F | Y | |
| **L₈₀** | Jul/18/00:02:23 | B | E | I | K |
| **L₈₁** | Jul/18/00:02:25 | A | E | H | J |
| **L₈₂** | Jul/18/00:02:26 | C | F | I | |
| **L₈₃** | Jul/18/00:02:28 | B | E | I | |
| **L₈₄** | Jul/18/00:02:29 | C | F | G | |
| **L₈₅** | Jul/18/00:02:30 | D | Z | I | U |
| **L₈₆** | Jul/18/00:02:32 | B | E | I | |
| **L₈₇** | Jul/18/00:02:33 | A | E | H | J |
| **L₈₈** | Jul/18/00:02:36 | D | E | I | V |
| **L₈₉** | Jul/18/00:02:37 | B | E | I | K |
| **L₉₀** | Jul/18/00:02:39 | C | F | G | |
| **L₉₁** | Jul/18/00:02:41 | C | F | Z | |
| **L₉₂** | Jul/18/00:02:43 | B | E | I | K |
| **L₉₃** | Jul/18/00:02:46 | A | E | H | J |
| **L₉₄** | Jul/18/00:02:47 | B | E | I | K |
| **L₉₅** | Jul/18/00:02:48 | C | F | I | |
| **L₉₆** | Jul/18/00:02:51 | B | E | I | K |
| **L₉₇** | Jul/18/00:02:52 | D | E | I | W |
| **L₉₈** | Jul/18/00:02:53 | A | E | H | J |
| **L₉₉** | Jul/18/00:02:55 | B | E | I | K |
| **L₁₀₀** | Jul/18/00:02:59 | D | E | I | X |

Im vorliegenden Ausführungsbeispiel beginnt jede Protokollzeile L₁, ..., L₁₀₀ mit einem einzelnen Zeitstempel, der den Zeitpunkt der Erstellung der jeweiligen Protokollzeile L₁, ..., L₁₀₀ beschreibt. Dieser Aufbau von Protokollzeilen ist für L₁, ..., L₁₀₀ zwar grundsätzlich üblich, im Rahmen der Erfindung ist es jedoch nicht zwingende erforderlich, diesen Aufbau insgesamt zu wählen.

Für die einzelnen Knoten der Syntaxbäume können als Muster, denen die jeweiligen Teilzeichenketten zu entsprechen haben, fixe Teilzeichenketten vorgegeben werden.

Daneben besteht auch die Möglichkeit, keine Vorgaben hinsichtlich einer Teilzeichenkette an einer bestimmten Position zu machen und dementsprechend einen Knoten mit variablem Inhalt zuzulassen. Darüber hinaus kann für die einzelnen im Rahmen der Erstellung von Syntaxbäumen verwendeten Knoten auch ein Muster, beispielsweise durch einen Regulären Ausdruck (engl. regular expression) vorgegeben werden. Dabei kann es sich beispielsweise um eine IP-Adresse oder einen Datumsstempel in einem bestimmten - mehr oder minder abstrakt gehaltenen - Datumsformat handeln, oder eingeschränkte Alphabete, wie zum Beispiel nur Ziffern und Punkte.

Die automatisierte Erstellung von Syntaxbäumen kann auf unterschiedliche Weise vorgenommen werden, wobei das im vorliegenden Fall dargestellte Ausführungsbeispiel der Erfindung eine besonders ressourcensparende, insbesondere zeit- und speichereffiziente, Vorgehensweise darstellt. Dabei wird nach Durchführung der Tokenisierung bzw. Aufteilung der einzelnen Protokollzeilen L₁, ..., L₁₀₀ in Teilzeichenketten eine spaltenweise Betrachtung der Protokollzeilen durchgeführt.

In diesem Zusammenhang werden jeder einzelnen Teilzeichenkette jeweils zwei Indizes zugeordnet, namentlich ein Zeilenindex, der die betreffende Protokollzeile L₁, ..., L₁₀₀, in der sich die Teilzeichenkette befindet, bezeichnet, und ein Positionsindex, der die Position der Teilzeichenkette innerhalb der jeweiligen Protokollzeile L₁, ..., L₁₀₀ angibt.

Nur beispielsweise wird die erste Protokollzeile, d.h. die Protokollzeile L₁ mit dem Zeilenindex 1, betrachtet, die wie folgt lautet:
JUL/18/00:00:01 A E H J

Die Protokollzeile L₁ enthält vier Leerzeichen, dementsprechend wird sie in fünf voneinander durch die Leerzeichen getrennte Teilzeichenketten unterteilt. Die einzelnen Teilzeichenketten sind nunmehr der Zeitstempel JUL/18/00:00:01 sowie die vier nachfolgenden zur Abstraktion von Wörtern verwendeten Buchstaben A, E, H und J. Die anderen Protokollzeilen werden auf dieselbe Weise in Teilzeichenketten unterteilt.

### Effiziente Vorgehensweise zur Erstellung eines Syntaxbaums:

Beim folgenden Vorgehen werden die einzelnen tabellarisch abgespeicherten Protokollzeilen spaltenweise betrachtet.

In einem ersten Schritt werden sämtliche Teilzeichenketten von Protokollzeilen betrachtet, deren Positionsindex den Wert 1 aufweist. Dabei handelt es sich im vorliegenden Ausführungsbeispiel um die einzelnen Teilzeichenketten, in denen der Zeitstempel der jeweiligen Protokollzeilen enthalten ist.

Im Rahmen einer Analyse der einzelnen Teilzeichenketten mit Positionsindex 1 wird festgestellt, dass diese allesamt einem vorab bekannten und vorgegebenen Muster folgen, nämlich dem folgenden, vorab vorgegebenen, regulären Ausdruck entsprechen und dass die einzelnen Teilzeichenketten durch einen Knoten repräsentiert werden können, dem das folgende Muster zugewiesen ist:
(Jan|Feb|Mar|Apr|May|Jun|Jul|Aug|Sep|Oct|Nov|Dec)/(0[1-9]|[1-2][0-9]|3[0-1])/(2[0-3]|[01][0-9]):[0-5][0-9]:[0-5][0-9]

Im Rahmen der Prüfung der einzelnen Teilzeichenketten der ersten Spalte werden für sämtliche der ermittelten Protokollzeilen Übereinstimmungen mit diesem Muster erkannt. Die Wahrscheinlichkeit dafür, dass eine Protokollzeile als erste Teilzeichenkette einen Zeitstempel enthält, der dem so festgelegten Muster entspricht, ist daher 1.

Der zu erstellende Syntaxbaum enthält einen Wurzelknoten, der den Einstieg in die Syntaxprüfung durch den Parser symbolisiert. Da im vorliegenden Fall die Wahrscheinlichkeit dafür, dass die Protokollzeilen an erster Stelle eine dem Muster entsprechende Teilzeichenkette aufweisen, einen ersten Wahrscheinlichkeitsschwellenwert θ₁ = 0,1 sowie einen zweiten Wahrscheinlichkeitsschwellenwert θ₂ = 0,95 überschreitet, wird in den Syntaxbaum ein einziger Knoten N₁ eingefügt. Dieser wird - als Zielknoten - über eine gerichtete Kante e₁ mit dem Wurzelknoten N₀ verbunden. Anhand des vorliegenden Beispiels wurde bereits eine Regel R2a zur rekursiven Erstellung von Syntaxbäumen näher dargestellt.

Wie an diesem Beispiel zu sehen war, wird dabei von einem Knoten, im vorliegenden Fall dem Wurzelknoten ausgegangen, dem sämtliche Protokollzeilen zugewiesen sind. Unter diesen Protokollzeilen wird mithilfe von statistischen Maßnahmen nach möglichst wenigen Mustern gesucht, die eine möglichst große Anzahl der ersten Teilzeichenkette gemeinsam haben. Im vorliegenden Fall konnte dies auf sehr einfache Weise gefunden werden, da die durch das Muster definierte Bedingung für sämtliche ersten Teilzeichenketten der Protokollzeilen zutrifft.

Zur Charakterisierung der relativen Häufigkeit, mit der die einzelnen Protokollzeilen bzw deren erste Teilzeichenkette dem dem Knoten zugeordneten Muster entspricht, wird der Kante e₁ der Wert 1 bzw 100% zugeordnet. Der im ersten Schritt erstellte Knoten N₁ wird einer ersten Schicht Y₁ des Syntaxbaums zugeordnet.

Im zweiten Schritt wird die zweite Spalte, die sämtliche Teilzeichenketten der Protokollzeilen enthält, deren Positionsindex 2 ist, betrachtet. In der vorstehend genannten Tabelle sind insgesamt fünf voneinander unterschiedliche Teilzeichenketten enthalten. Dabei ist zu beachten, dass die Teilzeichenketten A, B, C, D jeweils bei 24 der betrachteten Protokollzeilen an zweiter Stelle stehen, während die Teilzeichenkette L nur bei vier Protokollzeilen, nämlich bei den Protokollzeilen L₉, L₁₁, L₅₃ und L₇₄, an zweiter Stelle steht. Da die Protokolldatei insgesamt über 100 Zeilen verfügt, kann nun die Wahrscheinlichkeit bzw. relative Häufigkeit der Vorkommen der einzelnen Teilzeichenketten näher bestimmt werden. Im vorliegenden Ausführungsbeispiel betragen die relativen Häufigkeiten für das Auftreten von Teilzeichenketten A, B, C, D jeweils 0,24 bzw. 24 %, die Wahrscheinlichkeit für das Auftreten der Teilzeichenkette L an zweiter Stelle beträgt 0,04 oder 4 %.

Für den Aufbau eines Grammatikbaums ist im Folgenden zu untersuchen, welche der Teilzeichenketten mit ausreichender Häufigkeit in den Protokollzeilen vorkommen, dass sie in den Syntaxbaum übernommen werden können.

Dabei kann festgestellt werden, dass mehrere unterschiedliche Teilzeichenketten A, B, C, D bestehen, deren jeweilige relative Häufigkeit einen vorgegebenen zweiten Schwellenwert θ₁ überschreitet, während die relative Häufigkeit der Teilzeichenkette L diesen Schwellenwert θ₁ nicht überschreiten. Dieser Schwellenwert θ₁ wird im vorliegenden Ausführungsbeispiel mit θ₁=0,1 festgelegt. Die Teilzeichenkette L, deren relative Häufigkeit den Schwellenwert θ₁ nicht überschreitet, wird im Folgenden nicht beachtet und für die Erstellung des Syntaxbaums nicht weiter berücksichtigt.

In weiterer Folge wird die Summe derjenigen relativen Häufigkeiten für die Teilzeichenketten A, B, C, D ermittelt, die jeweils den ersten Schwellenwert überschreiten. Im vorliegenden Fall ergibt sich als Summe dieser relativen Häufigkeiten für die Teilzeichenketten A, B, C, D eine relative Häufigkeit von 0,24 + 0,24 + 0,24 + 0,24 = 0,96. Dieser Wert überschreitet einen dritten Wahrscheinlichkeitsschwellenwert θ₃, der im vorliegenden Ausführungsbeispiel einen Wert von θ₃ = 0,9 aufweist. Da somit im vorliegenden Fall eine Mehrzahl von Teilzeichenketten aufgetreten ist, deren einzelne relative Häufigkeiten einen ersten Wahrscheinlichkeitsschwellenwert θ₁ überschreiten, und deren summierte relative Häufigkeit einen dritten Wahrscheinlichkeitsschwellenwert θ₃ überschreitet, werden bei der Erstellung des Syntaxbaums mehrere Knoten eingefügt, denen jeweils ein Muster zugeordnet ist, dem die Teilzeichenketten entsprechen. Die einzelnen Knoten N₁₁ N₁₂ N₁₃ N₁₄ werden über gerichtete Kanten als Zielknoten mit dem jeweils vorangehenden Knoten N₁ verbunden.

Anhand dieser Vorgehensweise wurde eine Regel R3a näher dargestellt: Für den Fall, dass eine einen zweiten Wahrscheinlichkeitsschwellenwert übersteigende Anzahl an Protokollzeilen, deren erste Teilzeichenketten mit den einzelnen Mustern des bis zu einem bestimmten Basisknoten zurückgelegten Teilpfads, d.h. bis zum Knoten N₁ des Syntaxbaums übereinstimmen, eine daran anschließende, hier zweite, Teilzeichenkette aufweisen, eine Anzahl von Mustern in Übereinstimmung bringbar ist,
wobei auch für jedes einzelne Muster A, B, C, D jeweils eine einen ersten Schwellenwert übersteigende Anzahl von Protokollzeilen in Übereinstimmung bringbar ist und die summierte Anzahl dieser Protokollzeilen einen dritten Schwellenwert übersteigt,
für jedes der Muster A, B, C, D jeweils ein separater, dieses Muster A, B, C, D enthaltende Knoten N₁₁, N₁₂, N₁₃, N₁₄ erstellt wird, und diese Knoten mit dem Basisknoten über eine gerichtete Kante e₁₁, e₁₂, e₁₃, e₁₄ verbunden wird.

Jedem Knoten N₁₁ N₁₂ N₁₃ N₁₄ wird jeweils ein Muster zugeordnet, dem die jeweiligen Teilzeichenketten entsprechen, d.h. der Syntaxbaum liefert bei der Überprüfung einer Protokollzeile bei der Verarbeitung der zweiten Teilzeichenkette dann einen positiven Übereinstimmungswert, wenn an der zweiten Stelle bzw. der Stelle mit dem Positionsindex 2 die Teilzeichenkette A, B, c oder D steht.

Im vorliegenden Ausführungsbeispiel werden wiederum den einzelnen Kanten noch diejenigen Wahrscheinlichkeitswerte bzw relativen Häufigkeitswerte zugewiesen, die angeben, wie wahrscheinlich es für eine Protokollzeile, die dem jeweils vorangehenden Knoten N₁ zugewiesen ist, ist, dass sie an ihrer zweiten Stelle eine Teilzeichenkette enthält, die dem, dem Knoten zugeordneten, Muster entspricht.

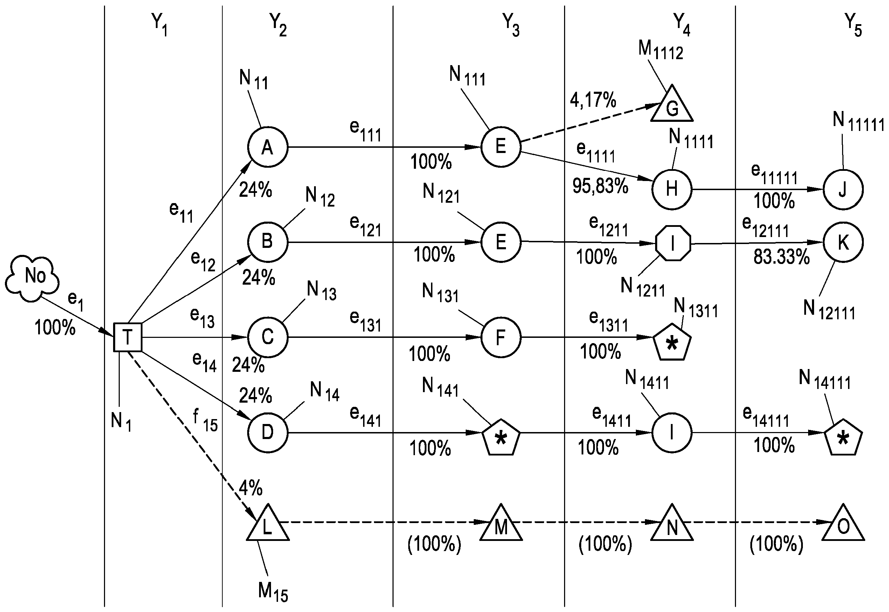

Zur besseren Verständlichkeit der verbleibenden Wahrscheinlichkeit wurde in Fig. 1 eine zusätzliche, strichliert gekennzeichneter Kante f₁₅ dargestellt, die zu einem nicht im Syntaxbaum enthaltenen Knoten M₁₅ führt, der für die insgesamt vier Vorkommen der Teilzeichenkette L in den Protokollzeilen steht. Ebenso ist lediglich zu Illustrationszwecken der betreffenden, den Knoten mit dem Wurzelknoten verbindenden Kante der Häufigkeitswert 0,04 zugewiesen, mit dem eine Teilzeichenkette L an der betreffenden Position auftritt. Dieser Knoten ist zwar durch die Wahrscheinlichkeitsverteilung der einzelnen zweiten Teilzeichenketten begründet, wird aber nicht in den Syntaxbaum eingetragen und dient auch nicht der Charakterisierung des Computersystems.

Während aufgrund der ersten Teilzeichenketten der Protokollzeilen keine Unterscheidung möglich war und alle Protokollzeilen dem Knoten N₁ zugewiesen wurden, werden nunmehr die Protokollzeilen zur weiteren Verarbeitung bzw zur weiteren Erstellung des Syntaxbaums auf die im zweiten Schritt erstellten Knoten N₁₁, N₁₂, N₁₃, N₁₄ verteilt. Diejenigen Protokollzeilen L₉, L₁₁, L₅₃ und L₇₄ die keinem der den Knoten N₁₁, N₁₂, N₁₃, N₁₄ zugeordneten Mustern entsprechen, werden für die weitere Verarbeitung nicht herangezogen bzw zu Illustrationszwecken dem nicht dem endgültigen Syntaxbaum zugehörenden Knoten M₁₅ zugeordnet bzw. nicht mehr weiterverarbeitet. Dabei handelt es sich um diejenigen Protokollzeilen, die an zweiter Stelle die Teilzeichenkette L aufweisen.

Die im zweiten Schritt erstellten Knoten N₁₁, N₁₂, N₁₃, N₁₄ werden einer zweiten Schicht Y₂ des Syntaxbaums zugeordnet.

In einem dritten Schritt werden nunmehr die Teilzeichenketten betrachtet, die an dritter Stelle in der jeweiligen Protokollzeile stehen bzw. deren Positionsindex gleich 3 ist. Bei der Verarbeitung der Teilzeichenketten, die sich in den einzelnen Protokollzeilen an dritter Stelle befinden, werden die einzelnen Teilzeichenketten nach der Zuordnung ihrer jeweiligen Protokollzeilen zu einem der Knoten N₁₁, N₁₂, N₁₃, N₁₄ separat weiterverarbeitet. Die einzelnen Teilzeichenketten werden knotenweise getrennt verarbeitet, d.h. diejenigen Teilzeichenketten, die an zweiter Stelle die Teilzeichenkette A aufweisen, werden unabhängig von denjenigen Protokollzeilen behandelt, die an zweiter Stelle die Teilzeichenkette B aufweisen, etc.

Die zuvor beschriebenen Berechnungen der relativen Häufigkeiten, auch als Pfadfrequenzen bezeichnet, werden nun erneut durchgeführt. Da unter den Teilzeichenketten, die an erster Stelle einen Zeitstempel, die Teilzeichenkette A an zweiter Stelle aufweisen, alle Zeichenketten an dritter Stelle die Teilzeichenkette E aufweisen, ist die relative Häufigkeit unter diesen Protokollzeilen dafür, dass sie an dritter Stelle die Teilzeichenkette E aufweisen, gleich 1. Da diese relative Häufigkeit den ersten und zweiten Wahrscheinlichkeitsschwellenwert θ₁, θ₂ überschreitet und es keine anderen Teilzeichenketten gibt, für die dies auch der Fall ist, wird entsprechend der Regel R2a in den Syntaxbaum lediglich ein einziger weiterer Knoten N₁₁₁ über eine neu erstellte, gerichtete Kante e₁₁₁ eingefügt. Dies bedeutet, dass der Syntaxbaum an der betreffenden Stelle lediglich eine Möglichkeit für Protokollzeilen umfasst. Der so erstellten gerichteten Kante e₁₁₁ wird der Wahrscheinlichkeitswert 1 zugewiesen, sämtliche Protokollzeilen des Knotens N₁₁ werden dem neu erstellten Knoten N₁₁₁ zugewiesen.

Betrachtet man nun die Protokollzeilen, die einen Zeitstempel an erster Stelle und die Teilzeichenkette B an zweiter Stelle aufweisen, so kann festgestellt werden, dass unter diesen sämtliche Protokollzeilen ein I an dritter Stelle aufweisen.

Unter denjenigen Protokollzeilen, die an erster Stelle einen Zeitstempel und an zweiter Stelle die Teilzeichenkette c aufweisen, folgen ausschließlich Teilzeichenketten, die an dritter Stelle die Teilzeichenkette F aufweisen.

Entsprechend Regel R2a kann daher dem Knoten N₁₂ über eine neu einzufügende Kante e₁₂₁ ein einziger Knoten N₁₂₁ mit einer Pfadfrequenz 1 nachgeordnet werden, dem sämtliche der Protokollzeilen des Knotens N₁₂ zugeordnet werden.

Ebenso kann entsprechend Regel R2a dem Knoten N₁₂ über eine neu einzufügende Kante e₁₂₁ ein einziger Knoten N₁₂₁ mit einer Pfadfrequenz 1 nachgeordnet werden, dem sämtliche der Protokollzeilen des Knotens N₁₂ zugeordnet werden.

Betrachtet man in weiterer Folge diejenigen Protokollzeilen des Knotens N₁₄, an deren erster Stelle ein Zeitstempel und an deren zweiter Stelle eine Teilzeichenkette D enthalten ist, so kann festgestellt werden, dass von diesen 24 Protokollzeilen genau 21 Protokollzeilen ein E an dritter Stelle aufweisen, die restlichen drei Zeilen jedoch entweder ein x, ein Y oder ein Z. De relative Häufigkeit der Teilzeichenkette E weist somit einen Wert von 21/24 = 0,876 auf, die relative Häufigkeit der übrigen Teilzeichenketten X, Y, Z weist den Wert 0,04167 auf. Daher ist die relative Häufigkeit der Teilzeichenkette E die einzige relative Häufigkeit, die den ersten Wahrscheinlichkeitsschwellenwert θ₁ übersteigt.

Die relative Häufigkeit der Teilzeichenketten E liegt jedoch unter θ₂, sodass im Folgenden aufgrund der Regel R2b kein eigener Knoten für die einzelnen Teilzeichenketten E, X, Y, Z gebildet wird, vielmehr wird ein Knoten N₁₄₁ erstellt, der ein variables Muster enthält, das mit jeder Teilzeichenkette übereinstimmt. Der Knoten N₁₄₁ wird über die Kante e₁₄₁ als Zielknoten mit dem Knoten N₁₄ verbunden. Die Protokollzeilen des Knotens N₁₄ werden dem Knoten N₁₄₁ zugewiesen.

Knoten mit variablen Mustern werden eingesetzt, um Teile von Protokollzeilen, die häufigen Änderungen unterliegen, darzustellen. Das verhindert, dass der Syntaxbaum einem zu großen Wachstum unterliegt, was zu einer enorm großen Komplexität des Syntaxbaums führen könnte. Zusätzlich sind solche variablen Knoten ausschlaggebend, um nicht nur die verwendeten Protokollzeilen parsen zu können, sondern auch neue und unbekannte Protokollzeilen sinnvoll zu parsen. Das liegt daran, dass Teile der Protokollzeilen, die bei den Eingabedaten mit einer hohen Variabilität, d.h., ausschließlich oder fast ausschließlich unterschiedliche und sich nicht wiederholende Zeichenketten, beispielsweise einen sich stetig erhöhenden Zeilenindex, auftreten, vermutlich auch in den unbekannten Daten mit einer ähnlichen Variabilität vorkommen, jedoch nicht genau die gleichen Zeichen umfassen. Im Syntaxbaum sind Knoten, die solche variablen Muster enthalten, als Fünfecke dargestellt.

Die im dritten Schritt erstellten Knoten N₁₁₁, N₁₂₁, N₁₃₁, N₁₄₁ werden einer dritten Schicht Y₃ des Syntaxbaums zugeordnet.

Nachdem nun die dritte Spalte der vorstehenden Tabelle der Protokollzeilen abgearbeitet ist, werden in einem vierten Schritt die Teilzeichenketten mit Positionsindex 4 behandelt, d.h. die an vierter Stelle in der Tabelle der Protokollzeilen enthalten sind.

Sofern bei einigen der Protokollzeilen an erster Stelle ein Zeitstempel, an zweiter Stelle die Teilzeichenkette A und an dritter Stelle die Teilzeichenkette E vorhanden ist, wird nunmehr untersucht, mit welcher relativen Häufigkeit Teilzeichenketten an der vierten Stelle auftreten. Dabei sind grundsätzlich mehrere Teilzeichenketten G, H als potentielle Nachfolger erkennbar. Die relative Wahrscheinlichkeit für das Auftreten der Teilzeichenkette G beträgt 1/24 = 4,17%, die relative Wahrscheinlichkeit für das Auftreten der Teilzeichenkette H beträgt 23/24 = 95,83%. Die relative Wahrscheinlichkeit für das Auftreten der Teilzeichenkette H übersteigt damit den ersten und zweiten Wahrscheinlichkeitsschwellenwert θ₁, θ₂. In diesem Fall wird entsprechend Regel R2a lediglich ein einziger Knoten N₁₁₁₁ mit einem Muster eingefügt, das ausschließlich mit der Teilzeichenkette H, nicht jedoch mit der Teilzeichenkette G, eine Übereinstimmung liefert. Der Kante, die den Knoten N₁₁₁ mit dem Knoten N₁₁₁₁ verbindet, wird eine relative Wahrscheinlichkeit von 95,83% zugeordnet. Dem Knoten N₁₁₁₁ werden alle dem Knoten N₁₁₁ zugeordneten Protokollzeilen zugeordnet, an deren vierter Position die Teilzeichenkette H enthalten ist. In Fig. 1 ist darüber hinaus auch noch der, nicht im Syntaxbaum enthaltene Knoten M₁₁₁₂ dargestellt, der die Übergangswahrscheinlichkeit für die Teilzeichenkette G symbolisiert. Die eine Teilzeichenkette L₅₈ wird diesem Knoten zugeordnet und/oder nicht weiter für die Erstellung des Syntaxbaums herangezogen.

Da unter den Teilzeichenketten, die an erster Stelle einen Zeitstempel, den Teilzeichenkette B an zweiter Stelle und E an dritter Stelle aufweisen, alle Zeichenketten an vierter Stelle die Teilzeichenkette I aufweisen, ist die relative Häufigkeit unter diesen Protokollzeilen dafür, dass sie an vierter Stelle die Teilzeichenkette I aufweisen, gleich 1. Da diese relative Häufigkeit den ersten und zweiten Wahrscheinlichkeitsschwellenwert θ₁, θ₂ überschreitet und es keine anderen Teilzeichenketten gibt, für die dies auch der Fall ist, wird entsprechend der Regel R2a in den Syntaxbaum lediglich ein einziger weiterer Knoten N₁₂₁₁ über eine neu erstellte, gerichtete Kante e₁₂₁₁ eingefügt. Dies bedeutet, dass der Syntaxbaum an der betreffenden Stelle lediglich eine Möglichkeit für Protokollzeilen umfasst. Der so erstellten gerichteten Kante e₁₂₁₁ wird der Wahrscheinlichkeitswert 1 zugewiesen, sämtliche Protokollzeilen des Knotens N₁₂₁ werden dem neu erstellten Knoten N₁₂₁₁ zugewiesen.

Betrachtet man die Protokollzeilen, die einen Zeitstempel an der ersten Stelle, eine Teilzeichenkette c an der zweiten Stelle und eine Teilzeichenkette F an der dritten Stelle aufweisen, so sind mehrere Teilzeichenketten als potentielle Nachfolgerknoten an der vierten Position erkennbar. Die Pfadfrequenzen für das Auftreten der Teilzeichenketten an der vierten Stelle sind wie folgt: G: 0,4167; H: 0,167; I: 0,25; W, X, Y, z: 0,04167.

Das bedeutet, dass die relativen Wahrscheinlichkeiten für das Auftreten der Teilzeichenketten G, H und I den ersten Wahrscheinlichkeitsschwellenwert θ₁ überschreiten, die relativen Wahrscheinlichkeiten für das Auftreten der Teilzeichenketten W, X, Y und z jedoch nicht. Da gleich mehrere Wahrscheinlichkeitswerte für das Auftreten von Teilzeichenketten den ersten Wahrscheinlichkeitsschwellenwert θ₁ überschreiten, gelangt eine der Regeln R3a, R3b zur Anwendung.

Die Summe der Pfadfrequenzen der Teilzeichenketten, die deren relative Wahrscheinlichkeit den ersten Wahrscheinlichkeitsschwellenwert θ₁ überschreiten ist 0,4167 + 0,167 + 0,25 = 0,8337 und überschreitet somit nicht den dritten Wahrscheinlichkeitsschwellenwert θ₃. Aus diesem Grund werden hier keine eigenen Knoten für die Teilzeichenketten G, H und I erstellt, sondern ein variabler Knoten mit einem Muster gebildet, dem jede beliebige Teilzeichenkette entspricht.

In weiterer Folge werden diejenigen Protokollzeilen weiterverarbeitet, die dem Knoten N₁₄₁ zugeordnet sind, dh es handelt sich dabei um Protokollzeilen, die an der ersten Stelle einen Zeitstempel aufweisen, an der zweiten Stelle die Teilzeichenkette D aufweisen und an der dritten Stelle eine beliebige Teilzeichenkette aufweisen. Es stellt sich heraus, dass alle diese Zeilen die Teilzeichenkette I an der vierten Stelle aufweisen. Ähnlich wie bereits für andere Knoten beschrieben wird entsprechend Regel R2a ein einziger Knoten N₁₄₁₁ mit einem der Teilzeichenkette I entsprechenden Muster erstellt.

Die im vierten Schritt erstellten Knoten N₁₁₁₁, N₁₂₁₁, N₁₃₁₁, N₁₄₁₁ werden einer vierten Schicht Y₄ des Syntaxbaums zugeordnet.

In einem fünften Schritt werden die einzelnen Protokollzeilen hinsichtlich ihrer Teilzeichenketten an der jeweils fünften Stelle untersucht.

Unter den dem Knoten N₁₁₁₁ zugeordneten Protokollzeilen befinden sich ausschließlich Protokollzeilen, an deren fünfter Stelle ausschließlich Teilzeichenketten J enthalten sind. Entsprechend Regel R2a wird ein einziger Knoten mit einem Muster in den Syntaxbaum eingefügt, der lediglich auf die Teilzeichenkette J übereinstimmt.

In den Protokollzeilen ist allerdings auch ersichtlich, dass ein eine beliebige Teilzeichenkette auf I folgt. Jede der Teilzeichenketten ist eindeutig, somit ist die Pfadfrequenz einer jeden Teilzeichenkette 0,04167. Keine dieser Pfadfrequenzen überschreitet den ersten Wahrscheinlichkeitsschwellenwert θ₁ und somit tritt Fall 1 (Regel R1) ein. In diesem Fall wird aus den bereits genannten Gründen jedenfalls ein variabler Knoten erstellt.

Betrachtet man nun die Protokollzeilen des Knotens N₁₂₁₁, die einen Zeitstempel an erster Stelle, ein B an zweiter Stelle, ein E an dritter Stelle aufweisen und ein I an vierter Stelle aufweisen, so erkennt man, dass nicht alle Protokollzeilen über weitere nachfolgende Teilzeichenketten verfügen, sondern an dieser Stelle enden (Protokollzeilen L₁₅, L₃₉, L₈₃, L₈₆). Gleichbedeutend haben nur 20 der 24 Protokollzeilen, die I an vierter Stelle aufweisen, die Teilzeichenkette K an fünfter Stelle stehen. Da der Anteil der endenden Logzeilen 4/24 = 0,167 beträgt und den vierten Wahrscheinlichkeitsschwellenwert θ₄ = 0,01 überschreitet, werden entsprechend Regel R4 alle nachfolgenden Knoten als optional betrachtet. Da der Anteil der Protokollzeilen, die an vierter Stelle die Teilzeichenkette I aufweisen, und an fünfter Stelle die Teilzeichenkette K stehen haben, 20/24 = 0.83 beträgt, und den fünften Wahrscheinlichkeitsschwellenwert θ₅ = 0,01 überschreitet, sind entsprechend Regel R4 nachfolgende optionale Knoten möglich. Um zu entscheiden, ob ein variabler Knoten oder ein bzw. mehrere fixe Knoten gebildet werden, werden nun die ursprünglichen drei Regeln überprüft, wobei als Grundwert 20, die Anzahl der nicht endenden Zeilen, herangezogen wird. Da die Zeilen, die an vierter Stelle die Teilzeichenkette I aufweisen, und an fünfter Stelle die Teilzeichenkette K stehen haben, demnach mit einer Häufigkeit von 20/20 = 1 auftreten und damit sowohl θ₁ als auch θ₂ überschreiten kommt Regel R2a zum Einsatz und es wird ein fixer Knoten N₁₂₁₁₁ gebildet. In der Darstellung des Syntaxbaums ist dieser Umstand dadurch gekennzeichnet, dass der Knoten I als Achteck markiert ist. Das bedeutet, dass eine dem Syntaxbaum entsprechende Protokollzeile, entweder in diesem Knoten N₁₂₁₁ entspricht und sofort anschließend endet, oder aber alle nachfolgenden Knoten N₁₂₁₁₁ erfüllt.

Da die den Knoten N₁₃₁₁, N₁₄₁₁ zugeordneten Protokollzeilen keine Teilzeichenketten an fünfter Stelle aufweisen, ist der Aufbau des Syntaxbaums bei diesen Knoten abgeschlossen und es werden keine neuen Kanten oder Knoten eingefügt.

Da ebenso die den Knoten N₁₁₁₁₁, N₁₂₁₁₁ zugeordneten Protokollzeilen keine Teilzeichenketten an sechsten Stelle aufweisen, ist der Aufbau des Syntaxbaums auch bei diesen Knoten abgeschlossen und es werden keine neuen Kanten oder Knoten eingefügt.

Die im fünften Schritt erstellten Knoten N₁₁₁₁₁, N₁₂₁₁₁ werden einer fünften Schicht Y₅ des Syntaxbaums zugeordnet.

### Regeln zur Erstellung des Syntaxbaums:

Bezogen auf die zu analysierenden Teilzeichenketten können die Regeln wie folgt zusammengefasst werden:
Regel R1: Kann für die Teilzeichenketten kein Muster gefunden werden, das eine relative Häufigkeit aufweist, die einen Wahrscheinlichkeitsschwellenwert θ₁ übersteigt, so wird an der betreffenden Stelle ein einziger Knoten eingefügt, der ein Muster aufweist, das mit jeder Teilzeichenkette eine Übereinstimmung ergibt. Der jeweiligen neu erstellten Kante wird eine Wahrscheinlichkeit von 1 zugewiesen. Alle dem Quellknoten der Kante zugewiesenen Protokollzeilen werden dem neu eingefügten Zielknoten zugewiesen.
Regel R2: Kann für die Teilzeichenketten ein einziges Muster gefunden werden, sodass die relative Häufigkeit der dem Muster entsprechenden Teilzeichenketten einen ersten Wahrscheinlichkeitsschwellenwert θ₁ übersteigt, so ist wie folgt zu unterscheiden:
Regel R2a: Überschreitet diese relative Häufigkeit auch den zweiten Wahrscheinlichkeitsschwellenwert θ₂, so wird ein einziger Knoten mit dem betreffenden Muster eingefügt. Der jeweiligen neu erstellten Kante wird der Anteil der dem Muster entsprechenden Teilzeichenketten zugewiesen. Alle dem Quellknoten der Kante zugewiesenen Protokollzeilen, die an der betreffenden Position eine dem Muster entsprechende Teilzeichenkette enthalten, werden dem neu eingefügten Zielknoten zugewiesen.
Regel R2b: Überschreitet diese relative Häufigkeit nicht auch den zweiten Wahrscheinlichkeitsschwellenwert θ₂, so wird an der betreffenden Stelle ein einziger Knoten eingefügt, der ein Muster aufweist, das mit jeder Teilzeichenkette eine Übereinstimmung ergibt. Der jeweiligen neu erstellten Kante wird eine Wahrscheinlichkeit von 1 zugewiesen. Alle dem Quellknoten der Kante zugewiesenen Protokollzeilen werden dem neu eingefügten Zielknoten zugewiesen.
Regel R3: Kann für die Teilzeichenketten eine Mehrzahl der Muster gefunden werden, sodass die relative Häufigkeit der den einzelnen Mustern entsprechenden Teilzeichenketten jeweils einzeln einen ersten Wahrscheinlichkeitswert θ₁ übersteigt, so ist wie folgt zu unterscheiden:
Regel R3a: Überschreitet die Summe der relativen Häufigkeiten der so erstellten Muster auch einen dritten Wahrscheinlichkeitsschwellenwert θ₃, so wird eine Anzahl von Knoten mit jeweils einem der ermittelten Muster eingefügt, wobei jeder Knoten über jeweils eine Kante mit dem ursprünglichen Knoten verbunden wird. Den so neu erstellten Kanten wird der Anteil der dem Muster entsprechenden Teilzeichenketten an der Gesamtzahl der dem ursprünglichen Knoten zugewiesenen Protokollzeilen zugewiesen. Die einzelnen Protokollzeilen werden auf die Knoten aufgeteilt, sodass jede Protokollzeile jeweils demjenigen Knoten zugeordnet wird, dessen Muster ihre jeweils betrachtete Teilzeichenkette entspricht.
Regel R3b: Überschreitet die Summe der relativen Häufigkeiten der so erstellten Muster auch einen dritten Wahrscheinlichkeitsschwellenwert θ₃ nicht, so wird an der betreffenden Stelle ein einziger Knoten eingefügt, der ein Muster aufweist, das mit jeder Teilzeichenkette eine Übereinstimmung ergibt. Der jeweiligen neu erstellten Kante wird eine Wahrscheinlichkeit von 1 zugewiesen. Alle dem Quellknoten der Kante zugewiesenen Protokollzeilen werden dem neu eingefügten Zielknoten zugewiesen.
Regel R4: Wenn die Anzahl derjenigen Protokollzeilen, die bei der betreffenden Position enden, einen vorgegebenen vierten Wahrscheinlichkeitsschwellenwert θ₄ überschreitet und die Anzahl derjenigen Protokollzeilen, die bei der betreffenden Position nicht enden, einen vorgegebenen fünften Wahrscheinlichkeitsschwellenwert θ₅ überschreitet, kann dem betreffenden Knoten ein Muster mit optionalem sofortigen Ende hinzugefügt werden. In diesem Fall wird bei der Prüfung einer Protokollzeile und einer Teilzeichenkette auf Übereinstimmung mit dem Muster eine Übereinstimmung dann als gegeben angesehen wird, wenn die jeweilige Teilzeichenkette mit dem Muster übereinstimmt und
   - auch die nachfolgenden Teilzeichenketten der Protokollzeile den jeweils nachfolgenden Mustern des Syntaxbaums entsprechen, oder
   - die Protokollzeile nach dieser Teilzeichenkette endet.

Als Grundwert für die Entscheidung, ob ein variabler Knoten, oder ein bzw. mehrere fixe Knoten entstehen wird die Anzahl der Protokollzeilen, die nicht endet herangezogen. Zur Entscheidung, welche Knoten erstellt werden sollen, werden die ersten drei Regeln herangezogen, mit dem eben beschriebenen Grundwert.

### Prüfung auf anormale Zustände:

Im Folgenden werden zwei Möglichkeiten der Prüfung, ob ein anormaler Zustand in dem die Protokollzeilen erstellenden Computersystem vorliegt, dargestellt. Bei der ersten Möglichkeit werden Änderungen im betreffenden Syntaxbaum untersucht. Im einfachsten Fall wird jeweils ein Syntaxbaum auf die vorstehend beschriebene Weise für zwei nicht idente Zeiträume separat erstellt. Dabei werden zwei Syntaxbäume erhalten, die bis identischer Funktionalität des Systems über die Zeit im wesentlichen dieselbe Form aufweisen sollten. Insbesondere dann, wenn hinreichend lange Zeiträume für die Untersuchung gewählt werden, in denen das Auftreten einzelner Typen von Protokollzeilen mit hinreichend großer Wahrscheinlichkeit bzw in hinreichend großer Anzahl vorhergesagt werden kann, sollten die beiden erstellten Syntaxbäume im wesentlichen dieselbe Struktur aufweisen.

In diesem Fall können die Bäume miteinander verglichen werden, und anhand des Vergleichs kann ein Übereinstimmungsmaß ermittelt werden, das angibt, wie stark die beiden Systemzustände voneinander abweichen. Bei der Ermittlung des Übereinstimmungsmaßes können auch die einzelnen bei der Erstellung des Syntaxbaums verwendeten Wahrscheinlichkeiten verwendet werden.

Zum Vergleich von zwei Syntaxbäumen können grundsätzlich unterschiedliche Verfahren herangezogen werden.

Eine vorteilhafte Methode besteht beispielsweise darin, die Protokollzeilen, die für die Erstellung des einen Syntaxbaums verwendet wurden, anschließend mithilfe des anderen Syntaxbaumes zu parsen. Wird dies auch umgekehrt durchgeführt, so können die Überschneidungen der Zuweisungen der Protokollzeilen als Ähnlichkeitsmaß herangezogen werden. Solche Ähnlichkeitsmaße sind beispielsweise der F-Score oder der Rand Index (Introduction to Information Retrieval, Manning, Christopher D. and Raghavan, Prabhakar and Schütze, Hinrich, Cambridge University Press, 2008).

Eine weitere bevorzugte Variante der Prüfung, ob ein anormaler Systemzustand vorliegt, besteht darin, die einzelnen Protokollzeilen von einem Parser prüfen zu lassen, dessen Funktionalität durch den Syntaxbaum festgelegt wird, bzw der eine Übereinstimmung mit dem Syntaxbaum prüft. Da diejenigen Protokollzeilen, die für die Erstellung des Syntaxbaums herangezogen wurden, aufgrund des zuvor beschriebenen Vorgehens mit großer Wahrscheinlichkeit P₁ auch diesem Syntaxbaum entsprechen, ist dies für später erstellte Protokollzeilen nicht notwendigerweise der Fall. Sofern die Wahrscheinlichkeit P₂, dass die während eines anderen, insbesondere nachfolgenden, Zeitraums erstellten Protokollzeilen dem Syntaxbaum entsprechen, gegenüber der Wahrscheinlichkeit P₁ signifikant bzw um einen vorgegebenen Schwellenwert verringert ist, kann ein anormaler Systemzustand detektiert werden.

Für die Prüfung, ob eine Protokollzeile dem Syntaxbaum entspricht, wird die Protokollzeile in ihre Teilzeichenketten untersucht. Dabei werden die Teilzeichenketten, die in der Protokollzeile L₁, ..., L₁₀₀ erhalten sind entsprechend ihrer Position in der Protokollzeile jeweils mit einzelnen Mustern der Knoten N₁, N₁₁, N₁₁₁, ... des Syntaxbaums in der durch diesen vorgegebenen Reihenfolge verglichen. Wird eine Übereinstimmung zwischen den Teilzeichenketten und den Knoten auf einem gerichteten Teilpfad des Syntaxbaums bzw deren Mustern gefunden, so entspricht die Protokollzeile insgesamt der durch den Syntaxbaum vorgegebenen Grammatik. Kann hingegen kein einziger gerichteter Teilpfad im Syntaxbaum gefunden werden, dem die Protokollzeile entspricht, so entspricht diese nicht der durch den Syntaxbaum vorgegebenen Grammatik und stellt daher einen anormalen Zustand dar.

### Veränderung des Syntaxbaums:

Der Syntaxbaum muss nicht notwendigerweise für einzelne Zeiträume oder Zeitabschnitte völlig neu ermittelt werden. Es besteht auch die Möglichkeit, den Syntaxbaum sukzessive anzupassen, um eine, beispielsweise tageweise, Neuermittlung des Syntaxbaums zu vermeiden. Dabei können die bei der Erstellung des Syntaxbaums vorgegebenen Pfadwahrscheinlichkeiten sukzessive anhand der neu erstellten Protokollzeilen angepasst werden. Für die einzelnen Kanten werden jeweils die bedingten Übergangswahrscheinlichkeiten über eine vorgegebene Anzahl von Zeitfenstern aktualisiert.

Dabei kann der Fall auftreten, dass die so gebildeten bedingte Übergangswahrscheinlichkeiten der einzelnen Kanten, insbesondere nach dem jeweiligen Zeitfenster oder einer vorgegebenen Anzahl von Zeitfenstern einen vorgegebenen Wahrscheinlichkeits-Schwellenwert unterschreiten. Dieser Umstand kann in vorgegebenen Zeitabständen untersucht werden. In diesem Fall können die folgenden Adaptierungen des Syntaxbaums vorgenommen werden.
- einzelne Kanten oder gerichtete Pfade, deren Wahrscheinlichkeit unter einen bestimmten Schwellenwert gesunken sind, werden aus dem Syntaxbaum gelöscht. Sofern ein Knoten aus dem Syntaxbaum gelöscht wird, werden auch alle ihm nachfolgenden Knoten und Kanten des Syntaxbaums gelöscht.
- das Muster von Knoten, denen ein vorgegebenes, nicht beliebiges, Muster zugewiesen ist, wird durch ein beliebiges Muster ersetzt.

Sofern zu einem späteren Zeitpunkt nach der Erstellung des Syntaxbaums eine signifikant hohe Anzahl von Protokollzeilen vorhanden ist, die keinem der durch Knoten und Kanten erstellten, gerichteten Pfade des Syntaxbaums zugeordnet sind, so kann für diese Protokollzeilen ein entsprechender, die einzelnen Protokollzeilen charakterisierender Pfad im Syntaxbaum durch Modifikation neu geschaffen werden. Die den einzelnen Kanten zugeordneten Pfadwahrscheinlichkeiten werden in diesem Fall an die neu aufgetretenen Protokollzeilen angepasst. Damit dies eintritt müssen auch wieder die zuvor genutzten Bedingungen erfüllt werden.

## Patentansprüche

1. Verfahren zur Charakterisierung des Zustands eines Computersystems, wobei
- vom Computersystem oder von auf diesem ablaufenden Prozessen jeweils Protokolle erstellt werden, indem bei Auftreten vorgegebener Ereignisse für jedes dieser Ereignisse jeweils eine Protokollzeile (L₁, ..., L₁₀₀) erstellt wird und wobei die Protokollzeile (L₁, ..., L₁₀₀) das jeweils protokollierte Ereignis beschreibt, und
- wobei jede derart erstellte Protokollzeile (L₁, ..., L₁₀₀) in eine Anzahl von Teilzeichenketten unterteilt wird,
**dadurch gekennzeichnet,**
- **dass** aufgrund der einzelnen Protokollzeilen (L₁, ..., L₁₀₀) sowie der Abfolge der einzelnen, in den Protokollzeilen (L₁, ..., L₁₀₀) enthaltenen Teilzeichenketten sowie aufgrund der Häufigkeit des Vorkommens der Protokollzeilen und der Teilzeichenketten in den Protokollzeilen ein die mögliche Abfolge von Teilzeichenketten beschreibender Syntaxbaum erstellt wird, und
- **dass** dieser Syntaxbaum als charakteristisch für den Zustand des Computersystems angesehen wird und
- **dass** der Syntaxbaum anhand der einzelnen Protokollzeilen als azyklischer, gerichteter Graph erstellt wird,
- wobei der Syntaxbaum Knoten (N₁, N₂) aufweist, denen jeweils ein Muster (P₁, P₂) zugeordnet wird, das bei Anwendung auf eine der Teilzeichenketten jeweils einen positiven oder negativen Übereinstimmungswert liefert,
- wobei der Syntaxbaum einzelne gerichtete Kanten aufweist, die ihren jeweiligen Quellknoten mit ihrem jeweiligen Zielknoten verbinden, wenn unter den einzelnen Protokollzeilen die bedingte Wahrscheinlichkeit dafür, dass
- unter der Bedingung, dass Teilzeichenketten in der Protokollzeile (L₁, ..., L₁₀₀) enthalten sind, die entsprechend ihrer Reihenfolge mit Mustern der einzelnen Knoten (N₁, N₁₁, N₁₁₁) auf einem vom Wurzelknoten (N) des Syntaxbaums zum Quellknoten (N₁₁) der Kante (e₁₁₁) führenden gerichteten Teilpfad entsprechend der Reihenfolge der Knoten (N₁, N₁₁, N₁₁₁) in diesem Teilpfad jeweils eine positive Übereinstimmung liefern, und
- als nächste Teilzeichenkette (s₁₃) in der betreffenden Protokollzeile (s₁) eine Teilzeichenkette vorliegt, die eine positive Übereinstimmung mit dem im Zielknoten (N₁₁₁) der betreffenden Kante (e₁₁₁) gespeicherten Muster aufweist,
einen vorgegebenen, allenfalls von der Position im Syntaxbaum abhängigen, Schwellenwert übersteigt, und
- die bedingte Übergangswahrscheinlichkeit der betreffenden Kante zugeordnet wird.

2. Verfahren nach Anspruch 1, **dadurch gekennzeichnet, dass**
a) anhand einer Anzahl von vorgegebenen oder innerhalb eines ersten Zeitraums erstellten Protokollzeilen (L₁, ..., L₁₀₀) ein Syntaxbaum, nach einem Verfahren nach einem der vorangehenden Ansprüche, erstellt wird,
b) die von den Computern oder den auf diesen Computern ablaufenden Prozessen bei Auftreten vorgegebener Ereignisse für jedes dieser Ereignisse jeweils erstellten Protokollzeilen während eines zweiten Zeitraums ermittelt werden,
c) mittels des Parsers überprüft wird, ob und/oder in welchem Ausmaß die in Schritt b) ermittelten Protokollzeilen die vom Syntaxbaum vorgegebenen Regeln erfüllen, und
d) ein anormaler Zustand dann festgestellt wird, wenn
- die Anzahl der während des ersten Zeitraums ermittelten und die vom Syntaxbaum vorgegebenen Regeln erfüllenden Protokollzeilen und
- die Anzahl der während des zweiten Zeitraums ermittelten und die vom Syntaxbaum vorgegebenen Regeln erfüllenden Protokollzeilen voneinander um ein vorgegebenes Maß abweichen.

3. Verfahren nach einem der vorangehenden Ansprüche, **dadurch gekennzeichnet,**
- **dass** für dasselbe Computersystem zu unterschiedlichen Zeitpunkten oder für unterschiedliche Systeme mit ähnlichem Aufbau und Verwendungszweck jeweils ein Syntaxbaum nach einem der vorangehenden Ansprüche ermittelt wird,
- **dass** zwischen den so erstellten Syntaxbäumen nach Abweichungen gesucht wird, und
- **dass** im Falle von Abweichungen, die einen vorgegebenen Schwellenwert überschreiten, ein abweichender, kritischer oder anormaler, Zustand des Computersystems gemeldet wird.

4. Verfahren nach einem der vorangehenden Ansprüche, **dadurch gekennzeichnet, dass** es sich beim Syntaxbaum um einen gewurzelten Baum, oder um einen gewurzelten Out-Tree, handelt.

5. Verfahren nach einem der vorangehenden Ansprüche, **dadurch gekennzeichnet,**
- **dass** bei der Erstellung des Syntaxbaums die einzelnen Teilzeichenketten der Protokollzeilen in einem zweidimensionalen Speicher mit zwei Zugriffsindizes abgespeichert werden, wobei der erste Zugriffsindex als Zeilenindex die Protokollzeile und der zweite Zugriffsindex als Positionsindex die Position der Teilzeichenkette innerhalb der jeweiligen Protokollzeile angibt,
- **dass** für die Teilzeichenketten, denen der niedrigste Positionsindex zugewiesen ist,
- nach einer Anzahl Mustern gesucht wird, die die Mehrzahl der Teilzeichenketten beschreiben,
- für die einzelnen Muster jeweils die Wahrscheinlichkeiten dafür ermittelt werden, dass eine der Teilzeichenketten mit dem Muster übereinstimmt,
- **dass** für die einzelnen Muster jeweils ein Knoten einer ersten Schicht in den Syntaxbaum eingefügt wird,
- diesem Knoten das jeweilige Muster sowie diejenigen Protokollzeilen zugewiesen werden, deren herangezogene Teilzeichenketten mit dem Muster des Knoten übereinstimmen,
- dieser Knoten als Zielknoten über eine gerichtete Kante mit dem Wurzelknoten des Syntaxbaums verbunden wird, und
- dieser Kante die jeweilige zuvor ermittelte Wahrscheinlichkeit zugewiesen wird, und
- **dass** für inkrementell ansteigenden Positionsindex der Teilzeichenketten in den Protokollzeilen jeweils:
- separat für einzelne Gruppen von Protokollzeilen, die jeweils einem Basisknoten der jeweils unmittelbar vorangehenden Schicht des Graphen zugeordnet sind, jeweils:
- nach einer Anzahl Mustern gesucht wird, die die Mehrzahl der Teilzeichenketten an der durch den jeweiligen Positionsindex festgelegten Position beschreiben,
- für die einzelnen Muster jeweils die Wahrscheinlichkeiten dafür ermittelt werden, dass die jeweilige Teilzeichenketten mit dem betreffenden Positionsindex mit dem Muster übereinstimmt,
- **dass** für die einzelnen Muster jeweils ein Knoten einer dem Positionsindex entsprechenden Schicht in den Graphen eingefügt wird,
- diesem Knoten das jeweilige Muster sowie diejenigen Protokollzeilen zugewiesen werden, deren herangezogene Teilzeichenketten mit dem Muster des Knoten übereinstimmen,
- dieser Knoten als Zielknoten über eine gerichtete Kante mit dem Basisknoten verbunden wird, und
- dieser Kante die jeweilige zuvor ermittelte Wahrscheinlichkeit zugewiesen wird.

6. Verfahren nach einem der vorangehenden Ansprüche, dass für den Fall, dass für die Teilzeichenketten kein Muster gefunden werden kann, das eine relative Häufigkeit aufweist, die einen Wahrscheinlichkeitsschwellenwert θ₁ übersteigt, an der betreffenden Stelle ein einziger Knoten eingefügt wird, der ein Muster aufweist, das mit jeder Teilzeichenkette eine Übereinstimmung ergibt,
wobei der jeweiligen neu erstellten Kante eine Wahrscheinlichkeit von 1 zugewiesen wird und/oder alle dem Quellknoten der Kante zugewiesenen Protokollzeilen dem neu eingefügten Zielknoten zugewiesen werden.

7. Verfahren nach einem der vorangehenden Ansprüche, **dadurch gekennzeichnet, dass** für den Fall, dass für die Teilzeichenketten ein Muster gefunden werden kann, sodass die relative Häufigkeit der dem Muster entsprechenden Teilzeichenketten einen ersten Wahrscheinlichkeitsschwellenwert θ₁ übersteigt,
- für den Fall, dass diese relative Häufigkeit auch den zweiten Wahrscheinlichkeitsschwellenwert θ₂ überschreitet, ein einziger Knoten mit dem betreffenden Muster eingefügt wird, wobei der jeweiligen neu erstellten Kante der Anteil der dem Muster entsprechenden Teilzeichenketten zugewiesen wird und/oder alle dem Quellknoten der Kante zugewiesenen Protokollzeilen, die an der betreffenden Position eine dem Muster entsprechende Teilzeichenkette enthalten, dem neu eingefügten Zielknoten zugewiesen werden, **und/oder**
- für den Fall, dass diese relative Häufigkeit nicht auch den zweiten Wahrscheinlichkeitsschwellenwert θ₂ überschreitet, an der betreffenden Stelle ein einziger Knoten eingefügt wird, der ein Muster aufweist, das mit jeder Teilzeichenkette eine Übereinstimmung ergibt, wobei der jeweiligen neu erstellten Kante eine Wahrscheinlichkeit von 1 zugewiesen wird, alle dem Quellknoten der Kante zugewiesenen Protokollzeilen dem neu eingefügten Zielknoten zugewiesen werden.

8. Verfahren nach einem der vorangehenden Ansprüche, **dadurch gekennzeichnet, dass** für den Fall, dass für die Teilzeichenketten eine Mehrzahl der Muster gefunden werden kann, sodass die relative Häufigkeit der den einzelnen Muster entsprechenden Teilzeichenketten jeweils einzeln einen ersten Wahrscheinlichkeitswert θ₁ übersteigt,
- für den Fall, dass die Summe der relativen Häufigkeiten der so erstellten Muster auch einen dritten Wahrscheinlichkeitsschwellenwert θ₃ überschreitet, eine Anzahl von Knoten mit jeweils einem der ermittelten Muster eingefügt wird, wobei jeder Knoten über jeweils eine Kante mit dem ursprünglichen Knoten verbunden wird **und/oder** den so neu erstellten Kanten der Anteil der dem Muster entsprechenden Teilzeichenketten an der Gesamtzahl der dem ursprünglichen Knoten zugewiesenen Protokollzeilen zugewiesen wird **und/oder** die einzelnen Protokollzeilen auf die Knoten aufgeteilt werden, sodass jede Protokollzeile jeweils demjenigen Knoten zugeordnet wird, dessen Muster ihre jeweils betrachtete Teilzeichenkette entspricht,
**und/oder**
- für den Fall, dass die Summe der relativen Häufigkeiten der so erstellten Muster auch einen dritten Wahrscheinlichkeitsschwellenwert θ₃ nicht überschreitet, an der betreffenden Stelle ein einziger Knoten eingefügt wird, der ein Muster aufweist, das mit jeder Teilzeichenkette eine Übereinstimmung ergibt, wobei der jeweiligen neu erstellten Kante eine Wahrscheinlichkeit von 1 zugewiesen wird, und/oder alle dem Quellknoten der Kante zugewiesenen Protokollzeilen dem neu eingefügten Zielknoten zugewiesen werden.

9. Verfahren nach einem der vorangehenden Ansprüche, **dadurch gekennzeichnet, dass** für den Fall,
dass die Anzahl derjenigen Protokollzeilen, die bei der betreffenden Position enden, einen vorgegebenen vierten Wahrscheinlichkeitsschwellenwert θ₄ überschreitet, und die Anzahl derjenigen Protokollzeilen, die bei der betreffenden Position nicht enden, einen vorgegebenen fünften Wahrscheinlichkeitsschwellenwert θ₅ überschreitet,
dem Muster des betreffenden Knoten die Option eines sofortigen Zeilenendes hinzugefügt wird,
und bei der Prüfung einer Protokollzeile und einer Teilzeichenkette auf Übereinstimmung mit dem Muster eine Übereinstimmung dann als gegeben angesehen wird, wenn die jeweilige Teilzeichenkette mit dem Muster übereinstimmt und
- auch die nachfolgenden Teilzeichenketten der Protokollzeile den jeweils nachfolgenden Mustern des Syntaxbaums entsprechen, oder
- die Protokollzeile nach dieser Teilzeichenkette endet,

10. Verfahren nach einem der vorangehenden Ansprüche, **dadurch gekennzeichnet, dass** die im Rahmen der Erstellung des Syntaxbaums verwendeten Schwellenwerte mit zunehmendem Abstand vom Wurzelknoten des Syntaxbaums oder mit zunehmender Pfadtiefe im Syntaxbaum ansteigen und/oder dem Abstand vom Wurzelknoten oder die Pfadtiefe angepasst werden, wobei
- der erste bis vierte Wahrscheinlichkeitsschwellenwert mit zunehmendem Abstand vom Wurzelknoten oder fortschreitender Pfadtiefe im Syntaxbaum monoton ansteigt oder abfällt.

11. Verfahren nach einem der vorangehenden Ansprüche, **dadurch gekennzeichnet, dass** als Muster vorgegeben werden:
- vorab vorgegebene Grundmuster, IP-Adressen oder andere strukturierte Daten, und/oder
- einzelne im Rahmen der Erstellung des Syntaxbaums festgelegte Zeichenketten.

12. Verfahren nach einem der vorangehenden Ansprüche, **dadurch gekennzeichnet, dass**
- für die einzelnen Pfade jeweils die bedingte Übergangswahrscheinlichkeit über eine vorgegebene Anzahl von Zeitfenstern, gebildet wird, und
- der weitere zeitliche Verlauf der so gebildeten bedingte Übergangswahrscheinlichkeiten der einzelnen Kanten, nach dem jeweiligen Zeitfenster oder einer vorgegebenen Anzahl von Zeitfenstern, daraufhin untersucht wird, ob diese einen vorgegebenen Wahrscheinlichkeits-Schwellenwert unterschreiten und in diesem Fall
- die ermittelten Pfade aus dem Graphen gestrichen werden und/oder
- einzelnen Knoten des Graphen anstelle von unveränderlichen Teilen variable Teile der Protokollzeilen zugeordnet werden.

13. Verfahren nach einem der vorangehenden Ansprüche, **dadurch gekennzeichnet**, für den Fall, dass zu einem späteren Zeitpunkt nach der Erstellung des Syntaxbaums eine signifikant hohe Anzahl von Protokollzeilen vorhanden ist, die keinem der durch Knoten und Kanten erstellten, gerichteten Pfade des Syntaxbaums zugeordnet sind, so kann für diese Protokollzeilen ein entsprechender, die einzelnen Protokollzeilen charakterisierender Pfad im Syntaxbaum durch Modifikation neu geschaffen werden und gegebenenfalls die den einzelnen Kanten zugeordneten Pfadwahrscheinlichkeiten werden in diesem Fall an die neu aufgetretenen Protokollzeilen angepasst werden.

14. Verfahren nach einem der vorangehenden Ansprüche, **dadurch gekennzeichnet, dass** vom Computersystem oder von auf diesem ablaufenden Prozessen zumindest eine weitere Protokollzeile erstellt wird, und dass mittels eines Parsers, der basierend auf dem Syntaxbaum erstellt wurde, untersucht wird, ob die weitere Protokollzeile mit dem Syntaxbaum übereinstimmt,
wobei gegebenenfalls eine fehlende Übereinstimmung als Hinweis für das Vorliegen eines abweichenden Systemzustands angesehen wird.

15. Datenträger, auf dem ein Programm zur Durchführung eines Verfahrens nach einem der vorangehenden Ansprüche abgespeichert ist.

## Claims

1. Method for characterising the state of a computer system, wherein
- in each case logs are generated by the computer system or by processes running on said computer system, in that at the occurrence of predetermined events, respectively one log line (L₁, ..., L₁₀₀) is generated for each of these events and wherein the log line (L₁, ..., L₁₀₀) describes the respectively logged event, and
- wherein each log line (L₁, ..., L₁₀₀) generated in such a manner is divided into a number of substrings,
**characterised in**
- **that** by reason of the individual log lines (L₁, ..., L₁₀₀) as well as of the sequence of the individual substrings contained in the log lines (L₁, ..., L₁₀₀) as well as by reason of the frequency of the occurrence of the log lines and of the substrings in the log lines a parse tree is generated describing the possible sequence of substrings, and
- **that** this parse tree is considered as characteristic of the state of the computer system and
- **that** the parse tree is generated on the basis of the individual log lines as an acyclic directed graph,
- wherein the parse tree has nodes (N₁, N₂) to which is assigned in each case one pattern (P₁, P₂) which when applied to one of the substrings delivers in each case a positive or negative matching value,
- wherein the parse tree has individual aligned edges which connect their respective source node with its respective target node, if among the individual log lines the conditional probability that
- under the condition that substrings are contained in the log line (L₁, ..., L₁₀₀) which corresponding to their sequence deliver in each case a positive correspondence with patterns of the individual nodes (N₁, N₁₁, N₁₁₁) on a partial path aligned leading from the root node (N) of the parse tree to the source node (N₁₁) of the edge (e₁₁₁), corresponding to the sequence of the nodes (N₁, N₁₁, N₁₁₁) in this partial path, and
- as next substring (s₁₃) a substring is present in the log line (s₁) concerned, which substring has a positive correspondence with the pattern stored in the target node (N₁₁₁) of the edge (e₁₁₁) concerned,
exceeds a predetermined threshold value which is at best dependent on the position in the parse tree, and
- the conditional transition probability is assigned to the edge concerned.

2. Method according to claim 1, **characterised in that**
a) a parse tree, according to a method according to any of the preceding claims, is generated on the basis of a number of log lines (L₁, ..., L₁₀₀) which are predetermined or generated within a first time period,
b) the log lines, generated, by the computers or the processes running on these computers at the occurrence of predetermined events, in each case for each of these events are determined during a second time period,
c) by means of the parser it is checked whether and/or to what extent the log lines determined in step b) fulfil the rules predetermined by the parse tree, and
d) an abnormal state is established if
- the number of the log lines ascertained during the first period and fulfilling the rules predetermined by the parse tree and
- the number of the log lines ascertained during the second period and fulfilling the rules predetermined by the parse tree
deviate from one another by a predetermined amount.

3. Method according to any of the preceding claims, **characterised in**
- **that** for the same computer system at different points in time or for different systems with similar construction and usage purpose is determined in each case a parse tree according to any of the preceding claims,
- **that** a search is made for deviations between the parse trees generated in such a manner, and
- **that** in the case of deviations which exceed a predetermined threshold value a deviant, critical or abnormal state of the computer system is reported.

4. Method according to any of the preceding claims, **characterised in that** the parse tree is a rooted tree or a rooted arborescence.

5. Method according to any of the preceding claims, **characterised in**
- **that** in the generation of the parse tree the individual substrings of the log lines are stored in a two-dimensional storage having two access indices, wherein the first access index as a line index specifies the log line and the second access index as a position index specifies the position of the substring within the respective log line,
- **that** for the substrings to which the lowest position index is assigned,
- a search is made for a number of patterns which describe the plurality of the substrings,
- for the individual patterns in each case the probabilities are ascertained that one of the substrings corresponds with the pattern,
- **that** for the individual patterns in each case one node of a first layer is inserted into the parse tree,
- the respective pattern as well as the respective log lines, the derived substrings of which correspond with the pattern of the node, are assigned to this node,
- this node is connected as target node via a directed edge with the root node of the parse tree, and
- the respective previously determined probability is assigned to this edge, and
- **that** for incrementally increasing position index of the substrings in the log lines in each case:
- separately for individual groups of log lines which are assigned in each case to a base node of the respectively immediately preceding layer of the graph, in each case:
- a search is made for a number of patterns which describe the plurality of the substrings at the position specified by the respective position index,
- the probabilities of the respective substrings with the position index concerned corresponding with the pattern are determined in each case for the individual patterns,
- **that** for the individual patterns in each case one node of a layer corresponding to the position index is inserted into the graph,
- to this node are assigned the respective pattern as well as those log lines, the derived substrings of which correspond with the pattern of the node,
- this node is connected as target node with the base node via a directed edge, and
- to this edge is assigned the respectively previously determined probability.

6. Method according to any of the preceding claims, that for the case that for the substrings can be found no pattern which has a relative frequency which exceeds a probability threshold θ₁, at the position concerned is inserted a single node which has a pattern which results in a correspondence with every substring,
wherein to the respectively newly generated edge is assigned a probability of 1 and/or all log lines assigned to the source node of the edge are assigned to the newly inserted target node.

7. Method according to any of the preceding claims, **characterised in that** for the case that a pattern can be found for the substrings, such that the relative frequency of the substrings corresponding to the pattern exceeds a first probability threshold θ₁,
- for the case that this relative frequency exceeds also the second probability threshold θ₂, a single node is inserted with the pattern concerned, wherein to the respective newly generated edge is assigned the share of the substrings corresponding to the pattern and/or all log lists assigned to the source node of the edge which at the position concerned contain a substring corresponding to the pattern are assigned to the newly inserted target node **and/or**
- for the case that this relative frequency does not exceed also the second probability threshold θ₂, a single node is inserted at the position concerned which has a pattern which results in a correspondence with every substring, wherein a probability of 1 is assigned to the respective newly generated edge, all log lines assigned to the source node of the edge are assigned to the newly inserted target node.

8. Method according to any of the preceding claims, **characterised in that** for the case that a plurality of the patterns can be found for the substrings, such that the relative frequency of the substrings corresponding to the individual pattern exceeds in each case individually a first probability threshold θ₁,
- for the case that the sum of the relative frequencies of the patterns generated in such a manner exceeds also a third probability threshold value θ₃, a number of nodes is inserted having respectively one of the ascertained patterns, wherein each node is connected with the original node via in each case one edge **and/or** the proportion of the substrings corresponding to the pattern at the entire number of the log lines assigned to the original nodes is assigned to the newly generated edges **and/or** the individual log lines are divided among the nodes, such that each log line is assigned in each case to the node, to whose pattern the log-line's respectively regarded substring corresponds,
**and/or**
- for the case that the sum of the relative frequencies of the patterns generated in such a manner does not exceed also a third probability threshold value θ₃, a single node is inserted at the position concerned which has a pattern which results in a correspondence with every substring, wherein to the respectively newly generated edge is assigned a probability of 1, and/or all log lines assigned to the source node of the edge are assigned to the newly inserted target node.

9. Method according to any of the preceding claims, **characterised in that** for the case
that the number of those log lines which end at the position concerned exceeds a predetermined fourth probability threshold value θ₄, and the number of those log lines which do not end at the position concerned exceeds a predetermined fifth probability threshold value θ₅,
the option of an immediate line end is added to the pattern of the node concerned,
and when checking a log line and a substring for correspondence with the pattern, a correspondence is considered to be given when the respective substring corresponds with the pattern and
- also the following substrings of the log lines correspond to the respectively following patterns of the parse tree, or
- the log line ends after this substring.

10. Method according to any of the preceding claims, **characterised in that** the threshold values used in the context of the generation of the parse tree increase with increasing distance from the root node of the parse tree or increase in the parse tree with increasing path depth and/or are adapted to the distance from the root node or the path depth are adapted, wherein
- the first to the fourth probability threshold value rises or falls monotonically with increasing distance from the root node or increasing path depth.

11. Method according to any of the preceding claims, **characterised in that** as patterns are predetermined:
- previously predetermined basic patterns, IP addresses or other structured data, and/or
- individual character strings determined in the context of the generation of the parse tree.

12. Method according to any of the preceding claims, **characterised in that**:
- for the individual parts is formed in each case the conditional probability of transition across a predetermined number of time windows, and
- the further temporal course of the thus formed conditional probabilities of transition of the individual edges, after the respective time window or a predetermined number of time windows, is examined to determine whether these undershoot a predetermined probability threshold value and in this case
- the ascertained paths are deleted from the graph and/or
- variable parts of the log lines are assigned to individual nodes of the graph instead of invariable parts.

13. Method according to any of the preceding claims, **characterised in that** for the case that a significantly high number of log lines is present at a later point in time after the generation of the parse tree which are not assigned to any of the directed paths generated by nodes and edges, thus an appropriate path characterising the individual log lines can be newly created for these log lines in the parse tree by modification and where necessary the path possibilities assigned to the individual edges are in this case adapted to the newly occurring log lines.

14. Method according to any of the preceding claims, **characterised in that** at least one further log line is generated by the computer system or by processes running on this computer system, and that by means of a parser which was generated on the basis of the parse tree it is checked whether the further log line corresponds with the parse tree,
wherein where necessary a lack of correspondence is considered as an indication for the presence of a deviating system state.

15. Data medium on which is stored a program for carrying out a method according to any of the preceding claims.

## Revendications

1. Procédé de caractérisation de l'état d'un système informatique, dans lequel
- des journaux sont respectivement créés par le système informatique ou des processus s'exécutant sur celui-ci, grâce à la création, lorsque des événements prédéfinis se produisent, d'une ligne de journal (L₁, ..., L₁₀₀) pour chacun desdits événements, dans lequel la ligne de journal (L₁, ..., L₁₀₀) décrit l'événement respectivement journalisé et
- dans lequel chaque ligne de journal (L₁, ..., L₁₀₀) ainsi créée est divisée en un certain nombre de sous-chaînes de caractères,
**caractérisé en ce que,**
- sur la base des lignes de journal individuelles (L₁, ..., L₁₀₀) et de la séquence des sous-chaînes de caractères individuelles contenues dans les lignes de journal (L₁, ..., L₁₀₀) et sur la base de la fréquence d'occurrence des lignes de journal et des sous-chaînes de caractères dans les lignes de journal, un arbre syntaxique décrivant la séquence possible des sous-chaînes de caractères est créé, et
- cet arbre syntaxique est considéré comme caractéristique de l'état du système informatique et
- l'arbre syntaxique est créé sous la forme d'un graphe orienté acyclique en se basant sur les lignes de journal individuelles,
- dans lequel l'arbre syntaxique présente des nœuds (N₁, N₂) auxquels est respectivement associé un patron (P₁, P₂) qui, lorsqu'il est appliqué à l'une des sous-chaînes de caractères, délivre respectivement une valeur de correspondance positive ou négative,
- dans lequel l'arbre syntaxique présente des arêtes orientées individuelles qui relient leurs nœuds source respectifs à leurs nœuds cible respectifs, si, en vertu des lignes de journal individuelles, la probabilité conditionnelle que
- à condition que la ligne de journal (L₁, ..., L₁₀₀) contienne des sous-chaînes de caractères qui délivrent respectivement une correspondance positive en fonction de leur ordre avec des patrons des nœuds individuels (N₁, N₁₁, N₁₁₁) sur un sous-chemin orienté menant de nœuds racine (N) de l'arbre syntaxique à des nœuds source (N₁₁) de l'arête (e₁₁₁) en fonction de l'ordre des nœuds (N₁, N₁₁, N₁₁₁) dans ledit sous-chemin, et
- une sous-chaîne de caractères présentant une correspondance positive avec le patron stocké dans le nœud cible (N₁₁₁) de l'arête (e₁₁₁) concernée est présente dans la ligne de journal (s₁) concernée sous forme de sous-chaîne de caractères (S₁₃) suivante,
dépasse une valeur de seuil prédéfinie pouvant dépendre de la position dans l'arbre syntaxique, et
- la probabilité de transition conditionnelle est associée à l'arête concernée.

2. Procédé selon la revendication 1, **caractérisé en ce que**
a) un arbre syntaxique est créé selon un procédé selon l'une quelconque des revendications précédentes sur la base d'un certain nombre de lignes de journal (L₁, ..., L₁₀₀) prédéfinies ou créées dans une première période,
b) les lignes de journal créées respectivement, lorsque des événements prédéfinis se produisent, pour chacun desdits événements par les ordinateurs ou par les processus exécutés sur lesdits ordinateurs sont déterminées pendant une seconde période,
c) l'analyseur est utilisé pour vérifier si et/ou dans quelle mesure les lignes de journal déterminées à l'étape b) satisfont aux règles prédéfinies par l'arbre syntaxique, et
d) un état anormal est donc détecté lorsque
- le nombre des lignes de journal déterminées pendant la première période et satisfaisant aux règles prédéfinies par l'arbre syntaxique et
- le nombre des lignes de journal déterminées pendant la deuxième période et satisfaisant aux règles prédéfinies par l'arbre syntaxique
divergent l'un de l'autre dans une mesure prédéfinie.

3. Procédé selon l'une quelconque des revendications précédentes, **caractérisé en ce que**
- un arbre syntaxique selon l'une quelconque des revendications précédentes est déterminé pour le même système informatique à des moments différents ou pour des systèmes différents présentant une structure et une perspective d'utilisation similaires,
- des divergences entre les arbres syntaxiques ainsi créés sont recherchées, et
- en cas de divergences dépassant une valeur de seuil prédéfinie, un état de divergence, critique ou anormal, du système informatique est signalé.

4. Procédé selon l'une quelconque des revendications précédentes, **caractérisé en ce que** l'arbre syntaxique est un arbre enraciné, ou une arborescence enracinée.

5. Procédé selon l'une quelconque des revendications précédentes, **caractérisé en ce que**
- lorsque l'arbre syntaxique est créé, les sous-chaînes de caractères individuelles des lignes de journal sont stockées dans une mémoire bidimensionnelle avec deux index d'accès, dans lequel le premier index d'accès indique la ligne de journal sous la forme d'un index de ligne et le second index d'accès indique la position de la sous-chaîne de caractères au sein de la ligne de journal respective sous la forme d'un index de position,
- pour les sous-chaînes de caractères auxquelles est affecté l'index de position le plus bas,
- le nombre de patrons décrivant la pluralité des sous-chaînes de caractères est recherché,
- les probabilités que l'une des sous-chaînes de caractères corresponde au patron sont déterminées respectivement pour chaque patron individuel,
- un nœud d'une première couche est inséré dans l'arbre syntaxique respectivement pour chaque patron individuel,
- le patron respectif et les lignes de journal dont les sous-chaînes de caractères impliquées correspondent au patron du nœud sont affectés audit nœud,
- ledit nœud est relié sous la forme d'un nœud cible au nœud racine de l'arbre syntaxique par l'intermédiaire d'une arête orientée, et
- la probabilité respective précédemment déterminée est affectée à ladite arête, et
- pour une augmentation progressive de l'indice de position des sous-chaînes de caractères dans les lignes de journal :
- séparément pour des groupes individuels de lignes de journal qui sont respectivement associées à un nœud de base de la couche respectivement immédiatement précédente du graphe, respectivement :
- le nombre de patrons décrivant la pluralité des sous-chaînes de caractères au niveau de la position spécifiée par l'index de position respectif est recherché
- les probabilités que les sous-chaînes de caractères respectives avec l'index de position concerné correspondent au patron sont déterminées respectivement pour chaque patron individuel,
- un nœud d'une couche correspondant à l'index de position est respectivement inséré dans le graphe pour chaque patron individuel,
- le patron respectif et les lignes de journal dont les sous-chaînes de caractères impliquées correspondent au patron du nœud sont affectés à ce nœud,
- ledit nœud est relié sous la forme d'un nœud cible au nœud de base par l'intermédiaire d'une arête orientée, et
- la probabilité respective préalablement déterminée est affectée à ladite arête.

6. Procédé selon l'une quelconque des revendications précédentes, **caractérisé en ce que**, dans le cas où aucun patron présentant une fréquence relative qui dépasse une valeur de seuil de probabilité θ₁ ne peut être trouvé pour les sous-chaînes de caractères, un nœud unique présentant un patron fournissant une correspondance avec chaque sous-chaîne de caractères est inséré au niveau de l'emplacement concerné,
dans lequel l'arête nouvellement créée respective se voit affectée une probabilité de 1 et/ou toutes les lignes de journal affectées au nœud source de l'arête sont affectées au nœud cible nouvellement inséré.

7. Procédé selon l'une quelconque des revendications précédentes, **caractérisé en ce que**, dans le cas où un patron peut être trouvé pour les sous-chaînes de caractères de sorte que la fréquence relative des sous-chaînes de caractères correspondant au patron dépasse une première valeur de seuil de probabilité θ₁,
- dans le cas où ladite fréquence relative dépasse également la deuxième valeur de seuil de probabilité θ₂, un nœud unique avec le patron concerné est inséré, dans lequel la proportion des sous-chaînes de caractères correspondant au patron est affectée à l'arête nouvellement créée respective et/ou toutes les lignes de journal affectées au nœud source de l'arête et qui contiennent une sous-chaîne de caractères correspondant au patron au niveau de la position concernée sont affectées au nœud cible nouvellement inséré, et/ou
- dans le cas où ladite fréquence relative ne dépasse pas également la deuxième valeur de seuil de probabilité θ₂, un nœud unique présentant un patron fournissant une correspondance avec chaque sous-chaîne de caractères est inséré au niveau de la position concernée, dans lequel une probabilité de 1 est affectée à l'arête nouvellement créée respective, toutes les lignes de journal affectées au nœud source de l'arête sont affectées au nœud cible nouvellement inséré.

8. Procédé selon l'une quelconque des revendications précédentes, **caractérisé en ce que** dans le cas où une pluralité de patrons peut être trouvés pour les sous-chaînes de caractères de sorte que la fréquence relative des sous-chaînes de caractères correspondant au patron individuel dépasse respectivement de manière individuelle une première valeur de probabilité θ₁,
- dans le cas où la somme des fréquences relatives des patrons ainsi créés dépasse également une troisième valeur de seuil de probabilité θ₃, un certain nombre de nœuds avec respectivement un des patrons déterminés est inséré, dans lequel chaque nœud est relié au nœud d'origine par l'intermédiaire de respectivement une arête et/ou la proportion des sous-chaînes de caractères correspondant au patron sur le nombre total de lignes de journal affectées au nœud d'origine est affectée aux arêtes nouvellement créées **et/ou** les lignes de journal individuelles sont réparties sur les nœuds de sorte que chaque ligne de journal est associée respectivement au nœud dont le patron correspond à sa sous-chaîne de caractères respectivement considérée, **et/ou**
- dans le cas où la somme des fréquences relatives des patrons ainsi créés ne dépasse également pas une troisième valeur de seuil de probabilité θ₃, un nœud unique présentant un patron fournissant une correspondance avec chaque sous-chaîne de caractères est inséré au niveau de l'emplacement concerné, dans lequel une probabilité de 1 est affectée à l'arête nouvellement créée respective et/ou toutes les lignes de journal affectées au nœud source de l'arête sont affectées au nœud cible nouvellement inséré.

9. Procédé selon l'une quelconque des revendications précédentes, **caractérisé en ce que** dans le cas où
le nombre des lignes de journal se terminant à la position concernée dépasse une quatrième valeur de seuil de probabilité θ₄ prédéfinie, et le nombre des lignes de journal qui ne se terminent pas à la position concernée dépasse une cinquième valeur de seuil de probabilité θ₅ prédéterminée,
l'option d'une fin de ligne immédiate est ajoutée au patron du nœud concerné,
et lors de la vérification de la correspondance d'une ligne de journal et d'une sous-chaîne de caractères avec le patron, une correspondance est considérée comme avérée si la sous-chaîne de caractères respective correspond au patron et
- les sous-chaînes de caractères suivantes de la ligne de journal correspondent également aux patrons respectivement suivants de l'arbre syntaxique, ou
- la ligne de journal se termine après ladite sous-chaîne de caractères,

10. Procédé selon l'une quelconque des revendications précédentes, **caractérisé en ce que** les valeurs de seuil utilisées dans le cadre de la création de l'arbre syntaxique augmentent avec l'augmentation de la distance par rapport au nœud racine de l'arbre syntaxique ou avec l'augmentation de la profondeur de chemin au sein de l'arbre syntaxique et/ou sont adaptées à la profondeur de chemin ou à la distance par rapport au nœud racine, dans lequel
- la première à la quatrième valeur de seuil de probabilité augmente ou diminue de manière monotone avec l'augmentation de la distance par rapport au nœud racine ou avec l'augmentation de la profondeur de chemin dans l'arbre syntaxique.

11. Procédé selon l'une quelconque des revendications précédentes, **caractérisé en ce que** les patrons sont définis comme étant :
- patrons de base prédéfinis, adresses IP ou autres données structurées, et/ou
- chaînes de caractères individuelles définies lors de la création de l'arbre syntaxique.

12. Procédé selon l'une quelconque des revendications précédentes, **caractérisé en ce que**
- la probabilité de transition conditionnelle est respectivement formée pour les chemins individuels par l'intermédiaire d'un nombre prédéfini de fenêtres temporelles, et
- après la fenêtre temporelle respective ou un nombre prédéfini de fenêtres temporelles, l'évolution temporelle ultérieure des probabilités de transition conditionnelles ainsi formées des arêtes individuelles est examinée pour voir si elles descendent en dessous d'une valeur de seuil de probabilité prédéfinie et dans ce cas
- les chemins déterminés sont supprimés du graphe et/ou
- des parties variables des lignes de journal sont associées à des nœuds individuels du graphe au lieu de parties invariables.

13. Procédé selon l'une quelconque des revendications précédentes, **caractérisé en ce que**, dans le cas où, à un moment ultérieur après la création de l'arbre syntaxique, il existe un nombre significativement élevé de lignes de journal qui ne sont associées à aucun des chemins orientés de l'arbre syntaxique créés grâce aux nœuds et arêtes, un chemin correspondant caractérisant les lignes de journal individuelles peut être nouvellement créé par modification dans l'arbre syntaxique pour lesdites lignes de journal et les probabilités de chemin associées aux arêtes individuelles sont dans ce cas éventuellement adaptées aux lignes de journal nouvelles apparues.

14. Procédé selon l'une quelconque des revendications précédentes, **caractérisé en ce qu'**au moins une autre ligne de journal est créée par le système informatique ou par des processus s'exécutant sur celui-ci, et **en ce qu'**un analyseur qui a été créé en se basant sur l'arbre syntaxique est utilisé pour examiner si la ligne de journal supplémentaire correspond à l'arbre syntaxique,
dans lequel une éventuelle absence de correspondance est considérée comme une indication de l'existence d'un état de système divergent.

15. Support de données sur lequel est stocké un programme permettant la mise en œuvre d'un procédé selon l'une quelconque des revendications précédentes.
